# EUROPEAN PATENT SPECIFICATION

(11) **EP 3 123 539 B1**
(45) Date of publication and mention of the grant of the patent: **25.11.2020**
(21) Application number: 15710519.8
(22) Date of filing: 19.03.2015
(51) Int. Cl.: H01M 2/20, H01M 10/48, H01M 2/10

(54) **CONNECTOR FOR CONNECTING CELLULAR ELECTRICAL ELEMENTS AND METHOD FOR INSTALLING SUCH A CONNECTOR ON A BATTERY UNIT**
VERBINDER ZUR VERBINDUNG ELEKTRISCHER ZELLENELEMENTE UND VERFAHREN ZUR INSTALLATION SOLCH EINES VERBINDERS AN EINE BATTERIEEINHEIT
CONNECTEUR DESTINÉ À CONNECTER DES ÉLÉMENTS ÉLECTRIQUES CELLULAIRES, ET PROCÉDÉ POUR INSTALLER UN TEL CONNECTEUR SUR UNE UNITÉ DE BATTERIE

(30) Priority: 24.03.2014 DE 102014205465
(43) Date of publication of application: 01.02.2017
(73) Proprietor: TE Connectivity Germany GmbH, 64625 Bensheim (DE)
(72) Inventor: GRZYWOK, Wilhelm, 81825 München (DE); DRESSEL, Andre Martin, 68623 Lampertheim (DE); HAUCK, Uwe, 14532 Kleinmachnow (DE)
(74) Representative: Grünecker Patent- und Rechtsanwälte PartG mbB
(86) International application number: PCT/EP2015/055743
(87) International publication number: WO 2015/144542

(56) References cited:
- EP-A1- 2 546 906
- DE-A1-102012 205 020
- DE-A1-102012 205 909
- US-A1- 2012 251 835
- US-A1- 2013 112 551

## Description

The invention relates to a connector for connecting cellular electrical elements, and a method for installing such a connector. Such cellular electrical elements may be connected to each other in series and/or in parallel.

It is, for example, possible to connect to each other voltage sources and/or sinks which are constructed as galvanic cells, capacitors or supercapacitors (Supercaps) in a traction battery of an electric vehicle in order to achieve high voltages and/or high capacitances. Voltage sources may in this instance act at the same time as voltage sinks in order to repeatedly supply and remove electrical energy. In a solution from the prior art, there are produced for each application differently constructed housings, in which conductive connection components are introduced and which are closed with a lid after the cells have been connected. This brings about a high level of construction and production complexity since the housings each have to be constructed individually and corresponding tool components have to be prepared. In another solution from the prior art, individual cells are connected by a conductive connection component being arranged manually therebetween. However, this also leads to a high level of production complexity.

Solutions of the art are, for instance, shown in US 2013/0112551 A1, DE 10 2012 205909 A1, EP 2546906 A1 and DE 10 2012 205020 A1. These prior art solutions respectively show a cover for an electro-chemical device having cell connectors comprising a compensation region and a cover with a carrier element formed as a mounting plate; a cell-contacting system for an electro-chemical assembly having a carrier member, a current line system and a cover member mountable to the carrier member, wherein the current line system comprises cell connectors for connecting adjacent battery cells; a battery module having connecting members for connecting adjacent electric cells with a flexible flat cable; and a cell-contacting system for an electro-chemical apparatus having a carrier element comprising openings for contacting a cell connector, which carrier element may be covered by a cover.

An object of the invention is to provide a solution which is less complex and therefore more cost-effective.

This object is achieved by a connector for connecting cellular electrical elements of a battery unit, having a cover-like carrier element and a covering element, a plurality of contact elements, each for electrically interconnecting two cellular electrical elements of the battery unit, being arranged in the carrier element, a plurality of connector elements being provided in the edge region of the carrier element, and a plurality of film conductors for contacting the contact elements with the connector elements being arranged in the carrier element, the carrier element having weld openings for welding the contact elements to respective contact locations of a cellular electrical element, wherein at least one contact element has a tongue which spatially overlaps with the plurality of film conductors, wherein the covering element being constructed in such a manner that the weld openings of the carrier element can be covered therewith, and wherein the tongue extends between two adjacent weld openings of the carrier element.

This object is also achieved by a method for installing an above connector on a battery unit having the following method steps:
a) placing the cover-like carrier element on a battery unit, with the side having the contact element facing the battery unit;
b) welding the contact element to the contact locations of a cellular electrical element through the weld openings of the carrier element;
c) covering the weld openings of the carrier element with the covering element.

A connector according to the invention is more simple and cost-effective to produce since the carrier element can be produced more simply with the covering element than a housing having a cover. In order to produce a contact with a cellular electrical element, the connector has a contact element which is arranged in the carrier element. Simple contacting is thereby ensured.

The solution according to the invention can be further improved with the following developments and embodiments which are each advantageous per se and which can be freely combined with each other.

The connector may have a plurality of contact elements which are arranged in the carrier element. It is thereby possible for a plurality of cellular electrical elements to be contacted. In particular, such contact elements may be arranged regularly one behind the other and, for example, may have a fixed spacing with respect to each other. With such an embodiment, it is, for example, possible to contact electrical elements which are arranged in rows.

The carrier element has weld openings. Owing to the weld openings, it is possible to weld the contact element to a cellular electrical element. They may be present on the carrier element or, for example, be cut from the carrier element by means of cutting or punching. A welding operation does not necessarily have to take place at the weld openings themselves. They may also serve only to enable a welding operation, for example, by enabling an electrical contact, so that, for example, at an opposing side a welding operation can take place, for instance by means of current flow. The contact element may be located below the weld openings.

The contact element may be welded through the weld opening in the carrier element to the cellular electrical element by an electrode of a welding device being pressed through the weld opening onto the contact element, whereby the contact element is pressed onto the cellular electrical element. Subsequently, a current can flow through the electrode and the contact element and a welding operation can be carried out between the contact element and the cellular electrical element. In such embodiments, therefore, it is possible owing to the electrode of the welding device to simultaneously achieve the mechanical connection between the contact element and the cellular electrical element and the electrical connection between the two.

Rows of weld openings which are in alignment in the longitudinal direction of the contact element may be arranged in the carrier element, in particular two rows may be present. Owing to the presence of two rows, the contact elements may be welded not only at a single location but also at two locations, whereby an electrically and mechanically more stable connection is achieved. In contrast to a single larger weld opening, through which two weld operations are possible, the stability of the carrier element is impaired to a lesser extent in the case of two separate smaller weld openings.

The contact element may be retained by the carrier element. For example, it may be retained by the carrier element by a positive-locking connection and/or by a frictionally engaging connection. A materially engaging connection is also possible. The contact elements may be fixed in the carrier element, for example, clamped, or hot-caulked, etcetera. In particular, the contact element may be retained on the carrier element by the retention element.

The strip-like retention element may be a separated portion of a strip material. For example, this strip material may be unrolled from a supply roll and parts thereof may be separated. Depending on the application, portions of different lengths may be separated. This enables high flexibility in terms of production. If a larger number of electrical elements are intended to be connected, longer pieces are separated and accordingly more contact elements used. Before or after the separation, the strip material may still have been processed, for example, it may be shaped or portions may be punched out of it.

The carrier element may be produced by means of injection-moulding.

The carrier element and/or the retention element may comprise a thermoplastic material. For example, they may comprise a plastics material. The carrier element and/or the retention element may thereby be readily produced and/or shaped.

The retention element may be constructed as a film, in particular therefore as a film having film conductors, and, for example, be bonded to the cover-like carrier element with a contact element. Owing to the adhesive bonding, the contact element may be secured and/or retained on the carrier element and the retention element. The contact element may be adhesively bonded exclusively to the carrier element or exclusively to the retention element.

The covering element may be bonded to the carrier element. An adhesive may be arranged between the two. Owing to this type of fitting, very simple handling is enabled.

The covering element is used for electrical insulation, for contact safety and provides mechanical protection of the weld locations. It may further be used for fitting tracing elements, such as snowflake codes, date clock and the like. It is particularly advantageous to form this covering element as an adhesively-bonded element. The covering element may also comprise a self-restoring film which has the advantage that occurrences of mechanical damage to the film close again.

The retention element may have an electrical film conductor which is in contact with the contact element. Such a retention element thus performs a dual function. It retains the contact element and at the same time enables electrical contacting of the contact element. A separate element for contacting the contact element is thereby superfluous and the number of components can be reduced.

The electrical film conductor may be embedded in the retention element. Simple handling is thereby ensured. At the same time, components of the retention element may be used, for example, to insulate the electrical conductor, whereby the material complexity is reduced.

The retention element may have a plurality of electrical film conductors which can be contacted by means of electrical elements. The electrical film conductors can be connected in each case to a contact element. At other locations, they may, for example, be able to be contacted from the outer side, for instance, in order to measure voltages. With such an embodiment, it is possible, for example, to contact and check a plurality of cellular electrical elements at the same time.

The retention element may have a plurality of electrical film conductors, which extend parallel with each other. Such an embodiment is particularly space-saving and may be useful in the event of mechanical processing. In particular, the electrical film conductors may extend in the longitudinal direction of the connector. It is thereby possible to simultaneously contact a plurality of cellular electrical elements which are located one behind the other in the longitudinal direction of the connector. Retention elements may include in particular flat-ribbon cables or flat-ribbon lines also called FFC (flat flex cable).

At least a relatively large number of film conductors which are located beside each other may extend between two rows of weld openings. The weld openings may thereby enable a mechanically stable connection owing to their spatial distance. At the same time, owing to the conductors which extend between the two rows of weld openings, a compact construction is possible.

The contact element may be plate-like. With such an embodiment, the contact element can be arranged in the carrier element in a particularly stable manner. At the same time, this embodiment enables a high current density. Plate-like contact elements which are punched and/or stamped from a metal sheet are, for example, particularly simple to produce.

The tongue can be used for simple contacting. The tongue faces film conductor. The tongue spatially overlaps with a plurality of film conductors, but may be in electrical contact only with a single film conductor. In the case of a plurality of contact elements, one contact element may be connected to one conductor, respectively.

In order to enable a compact construction, the tongue may extend between two adjacent weld openings of a row of weld openings.

The tongue may protrude in a conductor region of the retention element. In this instance, the tongue may be in contact with one or more conductors.

A plurality of electrical conductors may extend in a strip direction and the tongue may protrude perpendicularly relative to the strip direction into a conductor region of the retention element. A compact and at the same time secure construction is thereby achieved.

A contact element may be a cell connector for connecting two cells. Owing to such a contact element, it is, for example, possible to connect two cells in parallel or in series and they do not have to be contacted individually.

It is further particularly advantageous to provide the contact element with a slot, which extends between the two regions, at which a cell is contacted in each case. This slot brings about a tolerance compensation which can compensate for, on the one hand, tolerances between the position of the adjacent cells and, on the other hand, tolerances which are produced by means of a different temperature path.

The cellular electrical elements may be voltage sources and/or sinks, in particular galvanic cells. The connector may naturally also be used on other cellular electrical elements, for instance on capacitors, in particular supercapacitors ("Supercaps").

The solution according to the invention is explained in greater detail below by way of example with reference to advantageous embodiments and developments and the drawings. The developments and embodiments which are shown in this instance can be freely combined with each other and omitted, depending on which advantages are desired in the application.

In the drawings:
Figure 1 is a schematic, perspective view of a connector according to the invention from the side which comes to rest on the battery unit;
Figure 2 is an exploded view of the connector from Figure 1 without a covering element;
Figure 3 is a schematic plan view of the connector from Figure 1 and the battery unit and the covering unit;
Figure 4 is a schematic, perspective view of a second connector according to the invention from the side which comes to rest on the battery unit;
Figure 5 is a schematic, perspective view of the second connector according to the invention from the side at which the covering element comes to rest;
Figure 6 is a schematic, perspective view of how the contact elements and film conductors of the connector according to Figure 4 come to rest on the battery unit;
Figure 7 is a schematic, perspective view of the connector according to the invention from Figure 4 (without a covering element) having a battery unit;
Figure 8 is a schematic, perspective view of a plurality of connectors according to the invention from Figure 4 (without a covering element) having a plurality of battery units which are connected to each other;
Figure 9 is a schematic, perspective view of a plurality of connectors according to the invention from Figure 4 with a covering element having a plurality of battery units which are connected to each other.

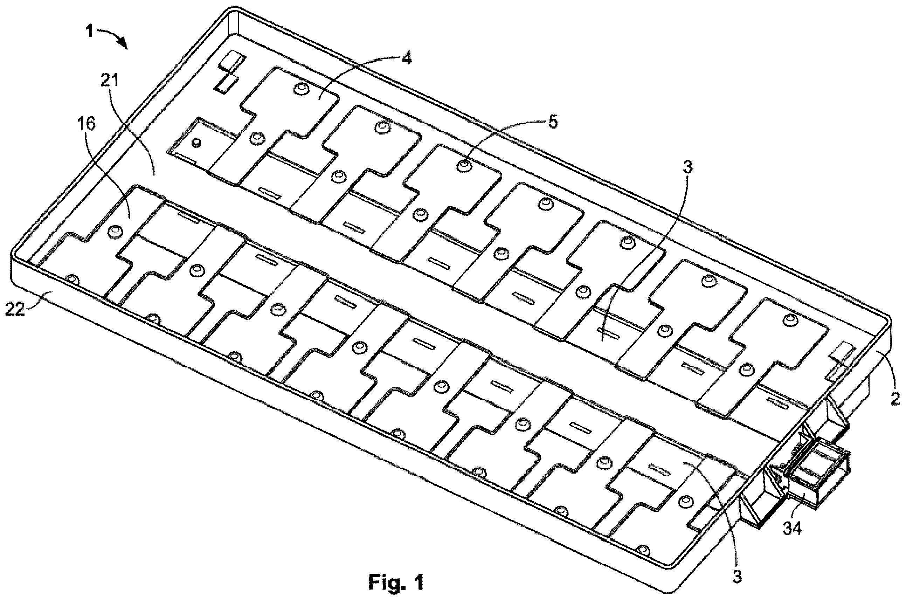

Figure 1 is a top view of a connector 1 according to the invention for connecting cellular electrical elements (not shown) from the side which is mounted on the battery unit. The connector 1 comprises a cover-like carrier element 2 and a plurality of contact elements 4 arranged in two parallel rows.

The carrier element 2 is constructed as an elongate base plate 21 having a peripheral edge 22. It has been produced by means of injection-moulding. In this instance, there were formed for securing the contact elements 4 pins 5 into which the contact elements 4 can be placed and then partially have a positive-locking connection with respect to the carrier element 2. In place of the pins, it would also be possible to provide receiving members for receiving the contacts. The pins 5 may be formed by means of hot-caulking in order to secure the contact elements 4.

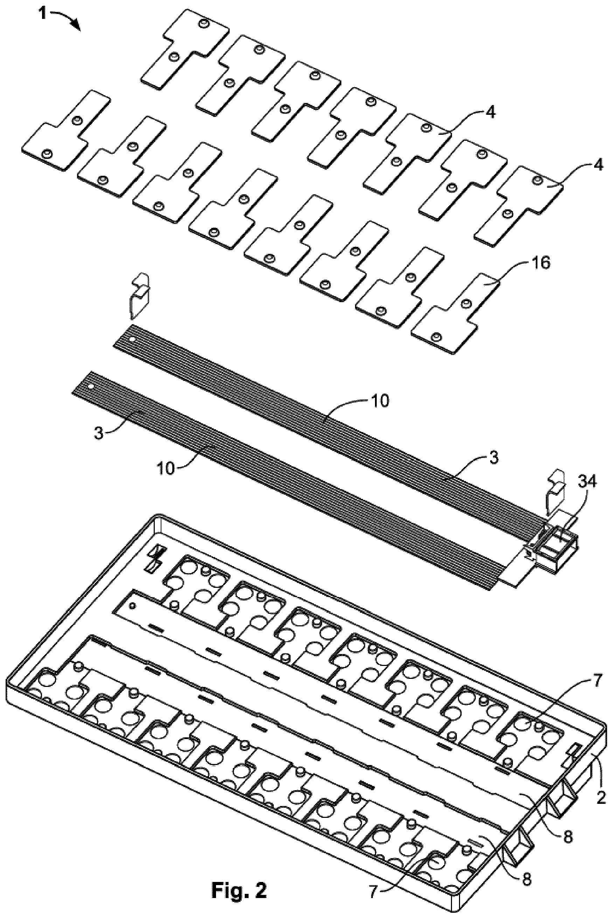

The exploded view in Figure 2 may also be interpreted as a pre-assembly position. During the assembly, the strip-like retention element 3 is inserted with the connector element 34 into the receiving members 8. Subsequently, the contact elements 4 are placed onto the pins 5 of the carrier element 2.

The retention element 3 substantially comprises two parallel films with film conductors 10. These film conductors 10 are connected at one end to contacts of a connector element 34. It is also possible to provide only one film having film conductors.

The retention element 3 may comprise a hot-melt adhesive material which, when thermally processed, connects at least partially to the carrier element 2 and the contact elements 4 in a materially engaging manner. In alternative embodiments, the retention element 3 may be adhesively bonded to the carrier element 2 and/or the contacts 4.

The retention element 3 thus performs two functions, the electrical and mechanical connection of the contact elements. However, it is also possible for the retention element to be used only for electrical contacting and for the retention function to be taken over by the carrier element 2.

There are provided on the carrier element 2 weld openings 7 through which the contact elements 4, when the connector is fitted on the battery unit without a covering element, that is to say, in the assembled state, are at least partially visible and through which the contact elements 4 are welded onto corresponding counter-elements of the cellular electrical elements. Depending on the application, it may also be unnecessary to weld the contact elements 4 to the cellular electrical elements.

For example, a pressing action may also be sufficient to produce a sufficiently good electrical contact.

The carrier element 2 has two rows 8 of weld openings 7. Within a row, the weld openings 7 are arranged one behind the other in a regular manner and with the same spacing in a longitudinal direction of the carrier element 2. It is thereby possible to contact a plurality of cellular electrical elements which are arranged one behind the other in a row.

The weld openings 7 on the carrier element 2 serve to enable welding with a welding device. Through the weld openings 7, an electrode of the welding device can electrically contact the contact element 4 and at the same time press the contact element 4 in a pressing direction A onto a counter-element of the cellular electrical element (not illustrated), which is arranged below the carrier element 2. Subsequently, power can be directed through this connection so that the contact element 4 is welded to the electrical element.

The carrier element 2 and the retention element 3 may also comprise a thermoplastic material, for example, a thermoplastic plastics material. In an alternative embodiment, the carrier element 2 or the retention element 3 may also comprise another material, for example, a thermosetting material or another insulating material. The contact elements 4 are of an electrically conductive material in order to enable good contacting.

The retention element 3 has a plurality of electrical film conductors 10 which are embedded in the retention element 3. The electrical film conductors 10 extend in a longitudinal direction of the retention element 3 and a longitudinal direction of the strip-like connector 1.

The electrical film conductors 10 extend one beside the other and in particular parallel with each other. A first bundle of electrical film conductors 10 and a second bundle of electrical film conductors 10 extend in parallel between two rows of contacts 4 in receiving members 8 in the carrier element 2. Each of the electrical film conductors 10 is in electrical contact with a contact element 4.

The electrical film conductors 10 guide in the longitudinal direction of the connector 1 and may, for example, be contacted at one end with the contacts of the connector element 34, for example, in order to measure the voltage at the individual contact elements 4.

The contact elements 4 shown are plate-like. Owing to this embodiment, they can be effectively inserted into the carrier element 2. At the same time, it is thereby possible to achieve a high current and carrying capacity. They may, for instance, have been formed by means of punching and/or stamping from a metal sheet. The connector 1 is therefore constructed in this instance in a sandwich-like manner, the contact elements 4 being arranged and retained parallel with a position formed by the retention element 3 and a position formed by the carrier element 2.

The contact elements 4 each have a tongue 16 which protrudes into a conductor region of the retention element 3. The tongue 16 is directed towards a bundle of film conductors 10. Each one of the film conductors 10 of the bundle is connected to a tongue 16 of a contact element 4. With respect to the other contact elements 4 and the tongues 16 thereof, this film conductor 10 is insulated by the insulating material of the retention element 3 since the electrical film conductors 10 are embedded in the retention element 3.

The tongues 16 each extend between two adjacent weld openings 7 of a row 8 of weld openings 7 on the carrier element 2. A construction which is compact in the longitudinal direction of the connecter 1 is thereby ensured. The tongues 16 therefore extend perpendicularly to the longitudinal direction of the electrical connector 1.

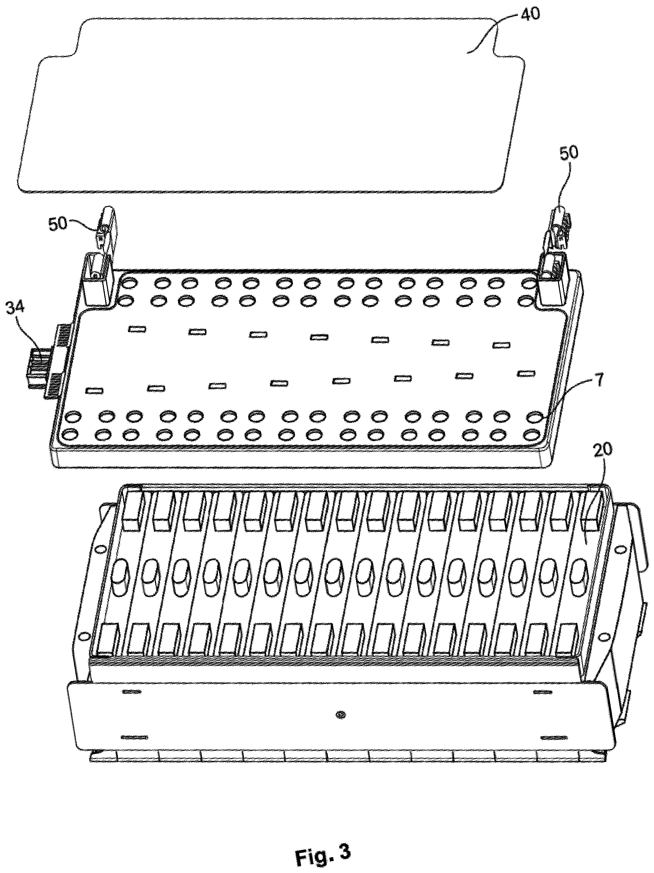

Figure 3 is an exploded view of the connector 1 from Figure 1 and the battery unit 20 and the covering element 40. The connections 150 for connecting to adjacent battery units can also be seen. The covering element 40 covers the weld openings 7 in the carrier element 2. The necessary insulation and protection from contact are thereby brought about. The covering element 40 is constructed as an adhesively bonded element and also provides protection against mechanical stresses, in particular when the film is constructed as a self-restoring film.

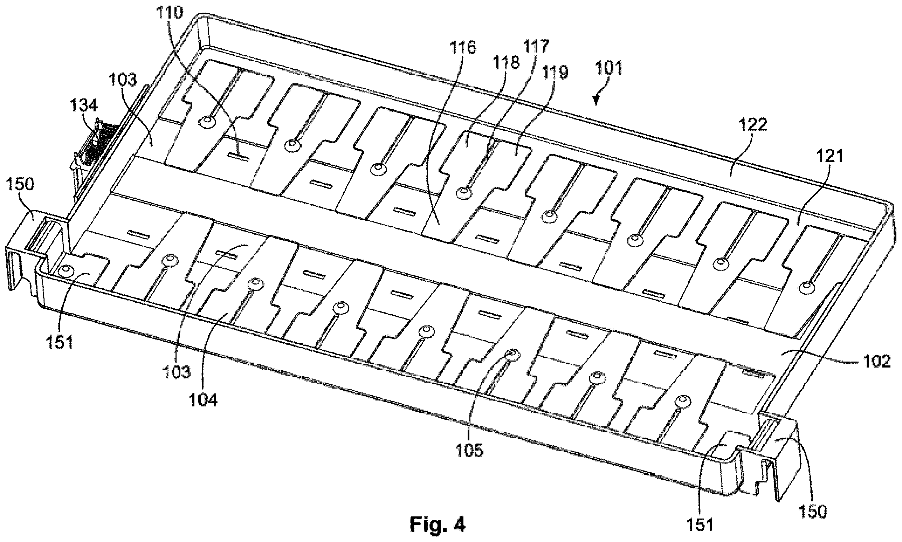

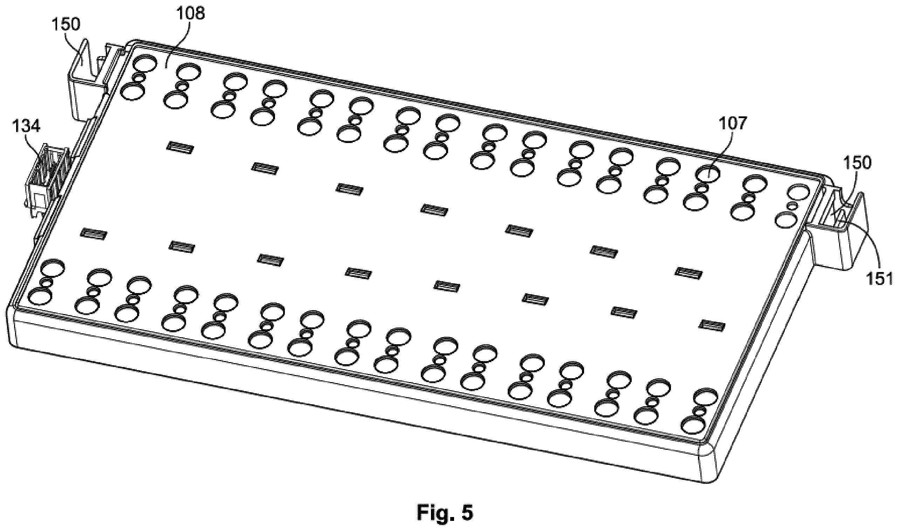

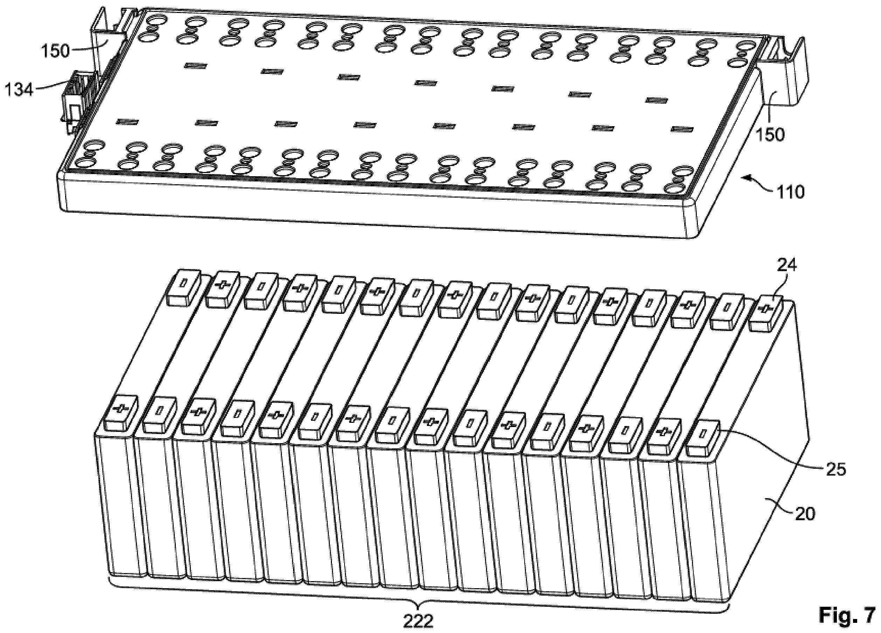

Figures 4 to 9 show a second embodiment of a connector 101. Figure 4 is a top view of the second connector 101 for connecting a plurality of cellular battery elements from the side which is mounted on the battery unit, without any covering element. The connector 101 also comprises a cover-like carrier element 102 having an elongate base plate 121 having a peripheral edge 122, a plurality of contact elements 104 in two parallel rows, pins 105 for securing the contact elements 104, two parallel strip-like retention elements 103 having film conductors 110 and having a connector element 134. It is further possible to see connections 150 for connecting the battery unit 222 to a battery unit. These are constructed so as to be safe from contact.

This second embodiment of the connector 101 is distinguished in particular by the contact elements 104 used. The contact elements 104 shown are also plate-like. The contact elements 104 each have a tongue 116 which protrudes into a conductor region of the retention element 103. The tongue 116 faces a bundle of film conductors 110. Each one of the film conductors 110 of the bundle is connected to a tongue 116 of a contact element 104. The tongues 116 each extend between two adjacent weld openings 107 of a row 108 of weld openings 107 on the carrier element 102. A contact element 104 is a cell connector for connecting two adjacent cells. The contact element 104 is intended to be provided with a slot 117 which extends between the two regions 118 and 119 at which a cell 20 is contacted. This slot 117 brings about a tolerance compensation which can compensate, on the one hand, for tolerances between the position of the adjacent cells and, on the other hand, for tolerances which are produced by a different temperature path. In each of the regions 118, 119 the welding is carried out (through at least one weld opening 107 in each case) with a contact of a cell.

The cellular electrical elements 20 are voltage sources and/or sinks in the form of galvanic cells which are part of a traction battery 23, as may be found, for example, in electrically driven vehicles for recurring removal and storage of electrical energy. The cellular electrical elements 20 each have an anode 24 and a cathode 25.

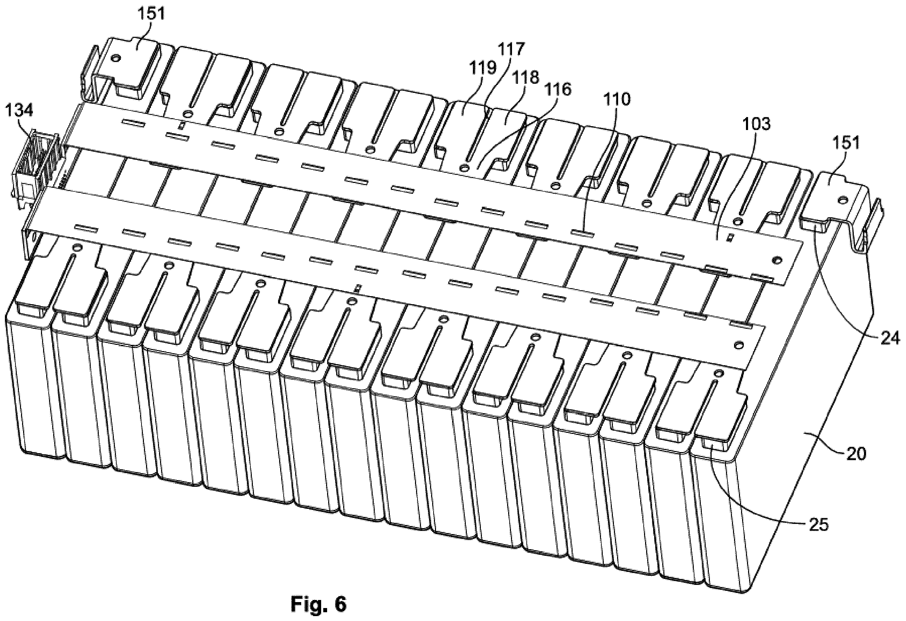

In the central region of the electrical connector 101, a contact element 104 in each case contacts the anode 24 of a first galvanic cell 20 with the cathode 25 of a second adjacent galvanic cell 20. In the embodiment shown here, the contact element 104 which is adjacent in the connector 101 then connects the anode 24 of a third galvanic cell 20 to the cathode 25 of a fourth galvanic cell 20, etcetera. Figure 4 also shows another connector 151 which accordingly connects the outer (upper in Figure 6) electrodes. This connector 151 of the connections 150 serves to connect a battery unit 222 to a battery unit 222 of a traction battery 23. On the whole, therefore, the cells 20 are connected to each other in series so that the voltages of the galvanic cells 20 are totalled. Therefore, the contact elements 104 act in this instance as cell connectors which connect the galvanic cells 20 to each other.

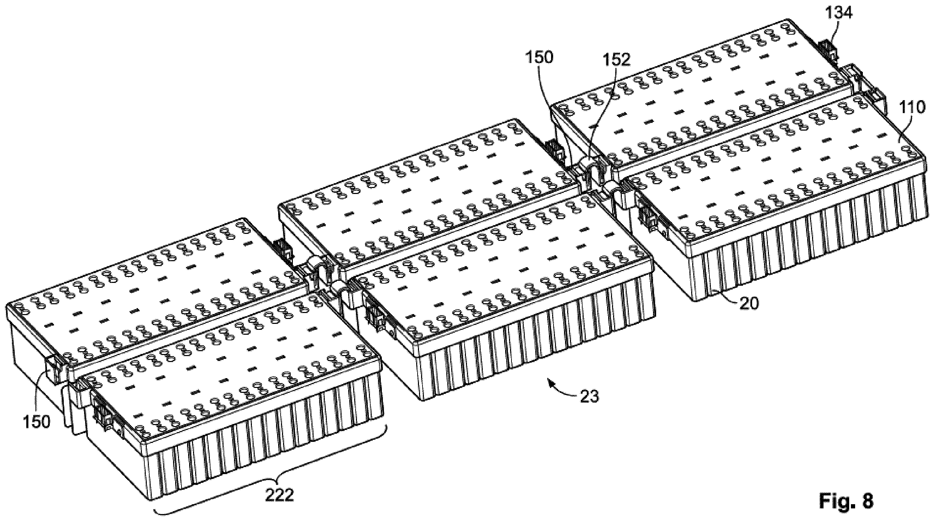

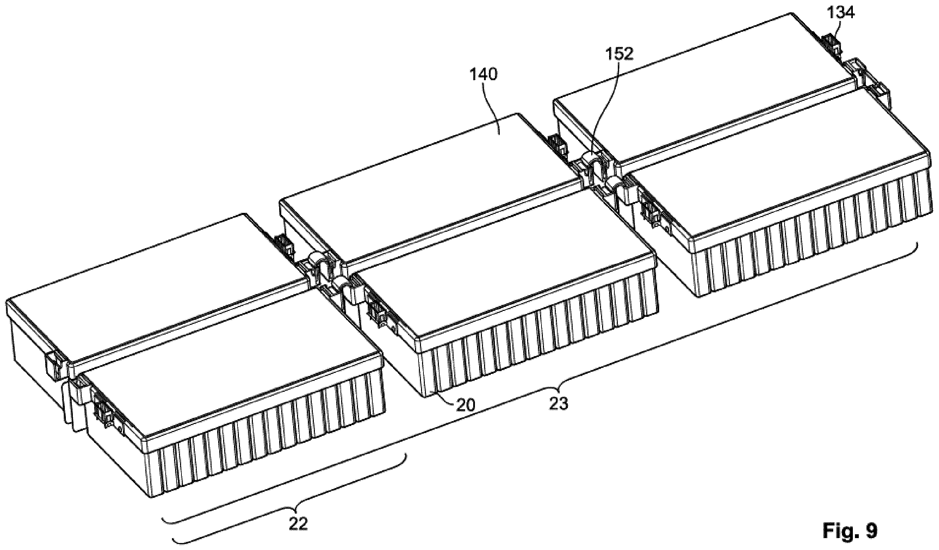

Two contact locations which are located one behind the other in a transverse direction (in accordance with two weld openings 107 in the two parallel rows 108) each contact a single electrode of a galvanic cell 20. The two contact locations which follow in the longitudinal direction of the electrical connector are arranged on the next galvanic cell 20, in this instance again on a single electrode. The additional contact elements 151 which are arranged at opposing ends are in contact only with a single electrode of a galvanic cell 20. They protrude beyond the remainder of the battery unit 222. They can be contacted and the voltage transferred to other electrical elements. As illustrated in Figures 8 and 9, a plurality of battery units 222 are connected to each other at the connections 150 by means of connection elements 152 and thus form a traction battery 23.

The electrical conductors 110 are each connected to a contact element 104 so that the voltage present at this contact element 104 can be constantly monitored. In order in this instance to be able to control the voltage at each contact element 104 individually, there are embedded in the strip-like retention elements 103 electrical conductors 110 which can be contacted individually, for example, at an end of the strip-like conductor 101, with the plug type connector 134. Each contact element is therefore electrically connected to a conductor 110. This connection can also be carried out by means of welding through the other weld openings 109 in the carrier element 102.

As an alternative to the embodiment shown in this instance, in which two connectors 101 are necessary, in order to produce a continuous zig-zag-like current path, all the anodes 24 and cathodes 25 of the cellular elements 20 can also be arranged in a single row one behind the other in a linear manner. A single connector 101 may then be sufficient in order to produce a continuous current path. In this instance, a first contact element connects an anode 24 of a first cellular element 20 to a cathode 25 of a second cellular element 20. The contact element 104 adjacent in the connector 101 then connects the anode 24 of the second cellular element 20 to the cathode 25 of a third cellular element 20, etcetera.

In the Figures, the use of the connector on galvanic cells 20 is illustrated purely by way of example. It may naturally also be used on other cellular electrical elements, such as on capacitors, in particular supercapacitors ("Supercaps").

### List of reference numerals

- 1, 101: Connector
- 2, 102: Cover-like carrier element
- 3, 103: Retention element
- 4, 104: Contact element
- 5, 105: Pin
- 7, 107: Weld opening
- 8, 108: Receiving member
- 9, 109: Additional weld opening
- 10, 110: Film conductor
- 16, 116: Tongues
- 117: Slot
- 118, 119: Region
- 20: Cellular electrical element
- 21, 121: Base plate
- 22, 122: Edge
- 222: Battery unit
- 23: Traction battery
- 24: Anode
- 25: Cathode
- 34, 134: Connector element
- 40, 140: Covering element
- 150: Connection
- 151: Additional contact element
- 152: Connection element

## Claims

1. Connector (1, 101) for connecting cellular electrical elements of a battery unit, comprising a cover-like carrier element (2, 102) and a covering element (40), a plurality of contact elements (4, 104), each for electrically interconnecting two cellular electrical elements of the battery unit, being arranged in the carrier element (2, 102), a plurality of connector elements (34, 134) being provided in the edge region of the carrier element (2, 102), and a plurality of film conductors (10, 110) for contacting the contact elements (4, 104) with the connector elements (34, 134) being arranged in the carrier element, the carrier element (2, 102) having weld openings (7, 107) for welding the contact elements to respective contact locations of a cellular electrical element, wherein at least one contact element (4, 104) has a tongue (16, 116) which spatially overlaps with the plurality of film conductors, **characterized in** the covering element (40, 140) being constructed in such a manner that the weld openings (7, 107) of the carrier element (2, 102) can be covered therewith, and **in that** the tongue (16, 116) extends between two adjacent weld openings (7, 107) of the carrier element (2, 102).

2. Connector according to claim 1, wherein the covering element (40, 140) comprises a film.

3. Connector according to either claim 1 or claim 2, wherein the covering element (40, 140) is coated with adhesive.

4. Connector according to any one of claims 1 to 3, wherein the covering element (40, 140) comprises a self-restoring film.

5. Connector according to any one of claims 1 to 4, wherein the covering element (40, 140) at the side facing away from the contact elements (4, 104) can be bonded to the carrier element (2, 102).

6. Connector according to any one of claims 1 to 5, wherein the contact elements (4, 104) and the film conductors (110) are retained in the carrier element (2, 102).

7. Connector according to any one of claims 1 to 6, wherein the film conductors (10, 110) are integrated in a retention element (3, 103), which retains the contact elements (4, 104) on the carrier element (2, 102).

8. Connector according to claim 7, wherein the retention element (3, 103) has the plurality of electrical film conductors (10, 110) which each contacts a contact element (4, 104) at one side and contacts a contact of the connector element (34, 134) at the other side.

9. Connector according to claim 7 or 8, wherein the retention element (3, 103) has a plurality of electrical conductors (10, 110) which extend parallel with each other.

10. Connector according to any one of claims 1 to 9, wherein at least one contact element (4, 104) is plate-like.

11. Connector according to any one of claims 1 to 10, wherein at least one contact element (4, 104) has two regions (118, 119) for contacting adjacent cells (20) which are decoupled from each other by means of a slot (117).

12. Connector (1) according to any one of claims 1 to 11, wherein the tongue (16) protrudes into a conductor region of the retention element (3, 103) for contacting a film conductor (10, 110).

13. Method for installing a connector (1, 101) according to any one of claims 1 to 12 on a battery unit (222) having the following method steps:
a) placing the cover-like carrier element (2, 102) on a battery unit, with the side having the contact element (4, 104) facing the battery unit;
b) welding the contact element (4, 104) to the contact locations of a cellular electrical element (20, 120) through the weld openings (7, 107) of the carrier element (2, 102);
c) covering the weld openings (7, 107) of the carrier element (2, 102) with the covering element (40, 140).

14. Method according to claim 13, **characterised in that** the covering element (40, 140) is bonded to the carrier element (2, 102).

## Patentansprüche

1. Verbinder (1, 101) zum Verbinden elektrischer Zellen-Elemente einer Batterie-Einheit, der ein deckelartiges Trägerelement (2, 102) und ein Abdeckelement (40), eine Vielzahl von Kontaktelementen (4, 104), die jeweils zwei elektrische Zellen-Elemente der Batterie-Einheit elektrisch miteinander verbinden und in dem Trägerelement (2, 102) angeordnet sind, eine Vielzahl von Verbinderelementen (34, 134), die in dem Randbereich des Trägerelementes (2,102) vorhanden sind, und eine Vielzahl von Folienleitern (10, 110) umfasst, die Kontakt der Kontaktelemente (4, 104) mit den Verbinderelementen (34, 134) herstellen und in dem Trägerelement angeordnet sind, wobei das Trägerelement (2, 102) Schweiß-Öffnungen (7, 107) zum Anschweißen der Kontaktelemente an jeweiligen Kontaktstellen eines elektrischen Zellen-Elementes aufweist und wenigstens ein Kontaktelement (4, 104) eine Zunge (16, 116) aufweist, die sich räumlich mit der Vielzahl von Folienleitern überlappt, **dadurch gekennzeichnet, dass** das Abdeckelement (40, 140) so aufgebaut ist, dass damit die Schweiß-Öffnungen (7, 107) des Trägerelementes (2, 102) abgedeckt werden können, und dass sich die Zunge (16, 116) zwischen zwei benachbarten Schweiß-Öffnungen (7, 107) des Trägerelementes (2, 102) erstreckt.

2. Verbinder nach Anspruch 1, wobei das Abdeckelement (40, 140) eine Folie umfasst.

3. Verbinder nach Anspruch 1 oder Anspruch 2, wobei das Abdeckelement (40, 140) mit Klebstoff beschichtet ist.

4. Verbinder nach einem der Ansprüche 1 bis 3, wobei das Abdeckelement (40, 140) eine selbstregenerierende Folie umfasst.

5. Verbinder nach einem der Ansprüche 1 bis 4, wobei das Abdeckelement (40, 140) an der von den Kontaktelementen (4, 104) abgewandten Seite mit dem Trägerelement (2, 102) verklebt werden kann.

6. Verbinder nach einem der Ansprüche 1 bis 5, wobei die Kontaktelemente (4, 104) und die Folienleiter (110) in dem Trägerelement (2, 102) gehalten werden.

7. Verbinder nach einem der Ansprüche 1 bis 6, wobei die Folienleiter (10, 110) in ein Halteelement (3, 103) integriert sind, das die Kontaktelemente (4, 104) an dem Trägerelement (2, 102) hält.

8. Verbinder nach Anspruch 7, wobei das Halteelement (3, 103) die Vielzahl elektrischer Folienleiter (10, 110) aufweist, die jeweils mit einem Kontaktelement (4, 104) an einer Seite in Kontakt sind und mit einem Kontakt des Verbinderelementes (34, 134) an der anderen Seite in Kontakt sind.

9. Verbinder nach Anspruch 7 oder 8, wobei das Halteelement (3, 103) eine Vielzahl elektrischer Leiter (10, 110) aufweist, die sich parallel zueinander erstrecken.

10. Verbinder nach einem der Ansprüche 1 bis 9, wobei wenigstens ein Kontaktelement (4, 104) plattenartig ist.

11. Verbinder nach einem der Ansprüche 1 bis 10, wobei wenigstens ein Kontaktelement (4, 104) zwei Bereiche (118, 119) zum Kontaktieren benachbarter Zellen (20) aufweist, die durch einen Schlitz (117) voneinander entkoppelt sind.

12. Verbinder (1) nach einem der Ansprüche 1 bis 11, wobei die Zunge (16) in einen Leiterbereich des Halteelementes (3, 103) zum Herstellen von Kontakt mit einem Folienleiter (10, 110) hinein vorsteht.

13. Verfahren zum Installieren eines Verbinders (1, 101) nach einem der Ansprüche 1 bis 12 an einer Batterie-Einheit (222), das die folgenden Verfahrensschritte aufweist:
a) Aufsetzen des deckelartigen Trägerelementes (2, 102) auf eine Batterie-Einheit, wobei die Seite mit dem Kontaktelement (4, 104) der Batterie-Einheit zugewandt ist;
b) Anschweißen des Kontaktelementes (4, 104) an den Kontaktstellen eines elektrischen Zellen-Elementes (20, 120) durch die Schweiß-Öffnungen (7, 107) des Trägerelementes (2, 102) hindurch;
c) Abdecken der Schweiß-Öffnungen (7, 107) des Trägerelementes (2, 102) mit dem Abdeckelement (40, 140).

14. Verfahren nach Anspruch 13, **dadurch gekennzeichnet, dass** das Abdeckelement (40, 140) mit dem Trägerelement (2, 102) verklebt wird.

## Revendications

1. Connecteur (1, 101) destiné à connecter des éléments électriques cellulaires d'une unité batterie, comprenant un élément support (2, 102) du type couvercle et un élément de recouvrement (40), une pluralité d'éléments de contact (4, 104), dont chacun est destiné à l'interconnexion électrique de deux éléments électriques cellulaires de l'unité batterie, étant agencés dans l'élément support (2, 102), une pluralité d'éléments connecteurs (34, 134) étant disposés dans la région de bord de l'élément support (2, 102), et une pluralité de films conducteurs (10, 110) destinés à la mise en contact des éléments de contact (4, 104) avec les éléments connecteurs (34, 134) étant agencés dans l'élément support, l'élément support (2, 102) comportant des ouvertures de soudure (7, 107) pour la soudure des éléments de contact sur des emplacements de contact respectifs d'un élément électrique cellulaire,
dans lequel au moins un élément de contact (4, 104) possède une languette (16, 116) qui chevauche spatialement la pluralité de films conducteurs,
**caractérisé en ce que** l'élément de recouvrement (40, 140) est construit de manière à pouvoir recouvrir les ouvertures de soudure (7, 107) de l'élément support (2, 102), et **en ce que** la languette (16, 116) s'étend entre deux ouvertures de soudure (7, 107) adjacentes de l'élément support (2, 102).

2. Connecteur selon la revendication 1, dans lequel l'élément de recouvrement (40, 140) comprend un film.

3. Connecteur selon la revendication 1 ou la revendication 2, dans lequel l'élément de recouvrement (40, 140) est revêtu d'un adhésif.

4. Connecteur selon l'une quelconque des revendications 1 à 3, dans lequel l'élément de recouvrement (40, 140) comprend un film auto-reconstituant.

5. Connecteur selon l'une quelconque des revendications 1 à 4, dans lequel l'élément de recouvrement (40, 140), au niveau du côté éloigné des éléments de contact (4, 104), peut être collé sur l'élément support (2, 102).

6. Connecteur selon l'une quelconque des revendications 1 à 5, dans lequel les éléments de contact (4, 104) et les films conducteurs (110) sont maintenus dans l'élément support (2, 102).

7. Connecteur selon l'une quelconque des revendications 1 à 6, dans lequel les films conducteurs (10, 110) sont intégrés à un élément de maintien (3, 103) qui maintient les éléments de contact (4, 104) sur l'élément support (2, 102).

8. Connecteur selon la revendication 7, dans lequel l'élément de maintien (3, 103) comprend la pluralité de films conducteurs électriques (10, 110) dont chacun entre en contact avec un élément de contact (4, 104) d'un côté et entre en contact avec un contact de l'élément connecteur (34, 134) de l'autre côté.

9. Connecteur selon la revendication 7 ou 8, dans lequel l'élément de maintien (3, 103) comprend une pluralité de conducteurs électriques (10, 110) qui s'étendent parallèlement les uns aux autres.

10. Connecteur selon l'une quelconque des revendications 1 à 9, dans lequel au moins un élément de contact (4, 104) est similaire à une plaque.

11. Connecteur selon l'une quelconque des revendications 1 à 10, dans lequel au moins un élément de contact (4, 104) comprend deux régions (118, 119), destinées à entrer en contact avec des cellules (20) adjacentes, qui sont découplées l'une par rapport à l'autre au moyen d'une fente (117).

12. Connecteur (1) selon l'une quelconque des revendications 1 à 11, dans lequel la languette (16) fait saillie dans une région conductrice de l'élément de maintien (3, 103) pour entrer en contact avec un film conducteur (10, 110).

13. Procédé d'installation d'un connecteur (1, 101) selon l'une quelconque des revendications 1 à 12 sur une unité batterie (222), comprenant les étapes de procédé suivantes :
a) placer l'élément support (2, 102) du type couvercle sur une unité batterie, avec le coté pourvu de l'élément de contact (4, 104) face à l'unité batterie ;
b) souder l'élément de contact (4, 104) sur les emplacements de contact d'un élément électrique cellulaire (20, 120) à travers les ouvertures de soudure (7, 107) de l'élément support (2, 102) ;
c) couvrir les ouvertures de soudure (7, 107) de l'élément support (2, 102) avec l'élément de recouvrement (40, 140).

14. Procédé selon la revendication 13, **caractérisé en ce que** l'élément de recouvrement (40, 140) est collé sur l'élément support (2, 102).
